# EUROPEAN PATENT SPECIFICATION

(11) **EP 3 457 276 B1**
(45) Date of publication and mention of the grant of the patent: **23.08.2023**
(21) Application number: 17001537.4
(22) Date of filing: 13.09.2017
(51) Int. Cl.: G06F 9/38, G06F 9/50, H04L 41/0823, H04L 41/16, H04L 43/045, H04L 43/065, H04L 43/0876, H04L 41/22

(54) **NETWORK SYSTEM, METHOD AND COMPUTER PROGRAM PRODUCT FOR REAL TIME DATA PROCESSING**
NETZWERKSYSTEM, VERFAHREN UND COMPUTERPROGRAMMPRODUKT ZUR ECHTZEITDATENVERARBEITUNG
SYSTÈME DE RÉSEAU, PROCÉDÉ ET PRODUIT-PROGRAMME D'ORDINATEUR POUR LE TRAITEMENT DE DONNÉES EN TEMPS RÉEL

(43) Date of publication of application: 20.03.2019
(73) Proprietor: SAP SE, 69190 Walldorf (DE)
(72) Inventor: Schrupp, Maximilian, 69190 Walldorf (DE); Wilbert, Anja, 69190 Walldorf (DE); Brain, Andreas, 69190 Walldorf (DE); Kreimer, Georg, 69190 Walldorf (DE)
(74) Representative: Müller-Boré & Partner Patentanwälte PartG mbB

(56) References cited:
- WO-A1-2010/146526
- US-A1- 2010 153 934
- US-B1- 8 782 265

## Description

The application relates to a network system, method and computer program product for real time data processing.

### BACKGROUND

In a network system, a huge amount of data may be generated and exchanged by devices at various locations. Such data may be referred to as "big data". In some circumstances, the data generated by devices at various locations may be collected and stored for further use. For example, the network traffic in the network system may be monitored for ensuring smooth operation of the network system, in which case data representing states of the network traffic at different devices may be generated and collected by a central processing device (e.g. a monitoring device). Further, for example, data representing activities of users of the devices at various locations may be collected via the network by a central processing device (e.g., a server).

In some circumstances, data from devices at various locations may arrive constantly at the central processing device and real time processing of the incoming data may be required.

For example, known systems for network administration may visualize states of network traffic in the network system to be monitored, which may enable interaction between the network system and a network system administrator. However, when monitoring a network system with a huge size and/or a huge amount of network traffic, it may be difficult to visualize in real time the data representing the states of the network traffic and/or to process the data for enabling interaction by the system network administrator in real time.

WO 2010/146526 A1 describes a method for interactive simulation of images provides for detecting the position of an instrument with respect to an environment to be simulated and for processing the physical simulation through a first graphic processing unit, in such a manner to define the positions of the points and the current forces regarding said physical element of said environment to be simulated. Said physical simulation is downloaded to a first main memory serving a first central processing unit, and the tactile rendering representing the interaction between said instrument and said physical element is returned. The physical simulation is reprocessed to calculate point to point movements regarding said element to be simulated and the data regarding said point to point movements are transferred to a respective second main memory. Eventually, the graphic rendering of the element to be simulated is obtained.

### SUMMARY

According to an aspect, the problem relates to facilitating real time processing of incoming data. The problem is solved by a network system, a method and a computer program product as defined in the independent claims respectively. Further exemplary embodiments are defined by the dependent claims.

In various embodiments and examples described herein, the phrase first data being "derived from" second data may be understood that the first data is at least a part of data that can be obtained from the second data. For example, the first data "derived from" the second data may include data extracted from the second data. Additionally or alternatively, the first data "derived from" the second data may include data obtained by converting at least a part of the second data.

The subject matter described in the application can be implemented as a method or as a system, possibly in the form of one or more computer program products. The subject matter described in the application can be implemented in a data signal or on a machine readable medium, where the medium is embodied in one or more information carriers, such as a CD-ROM, a DVD-ROM, a semiconductor memory, or a hard disk. Such computer program products may cause a data processing apparatus to perform one or more operations described in the application.

In addition, subject matter described in the application can also be implemented as a system including a processor, and a memory coupled to the processor. The memory may encode one or more programs to cause the processor to perform one or more of the methods described in the application. Further subject matter described in the application can be implemented using various machines.

### BRIEF DESCRIPTION OF THE DRAWINGS

Details of one or more implementations are set forth in the exemplary drawings and description below. Other features will be apparent from the description, the drawings, and from the claims. It should be understood, however, that even though embodiments are separately described, single features of different embodiments may be combined to further embodiments.
**Fig. 1** shows an example of a network system.
**Fig. 2** shows an exemplary functional block diagram of a central processing device, artificial intelligence (Al) engine and a virtual reality (VR) system.
**Fig. 3** shows a flowchart of an exemplary processing performed by the central processing device.
**Figs. 4A to 4F** and 5A to 5F show at least parts of exemplary images that may be shown on a display device by the central processing device.
**Fig. 6** shows an exemplary hardware configuration of a computer that may be used to implement at least a part of the system described herein.

### DETAILED DESCRIPTION OF EMBODIMENTS

In the following text, a detailed description of examples will be given with reference to the drawings. It should be understood that various modifications to the examples may be made. In particular, one or more elements of one example may be combined and used in other examples to form new examples.

In the exemplary embodiments and various examples described herein, live streamed data of multiple events may be processed and displayed in a virtual reality (VR) environment. The exemplary embodiments and various examples may make use of various human interface devices (HIDs) to enable user interaction with data in the VR environment. The processed data may be virtually rendered into VR. With a network system according to the exemplary embodiments and various examples, a user can get a different view and understanding on the overall displayed data leveraging the spatial comprehension of the user. The user can interact and manipulate data in real time and train an individually interacting artificial intelligence (Al) for future decisions with regards to the data.

In the following, an exemplary embodiment relating to monitoring network traffic in a network system will be described first.

### Network System

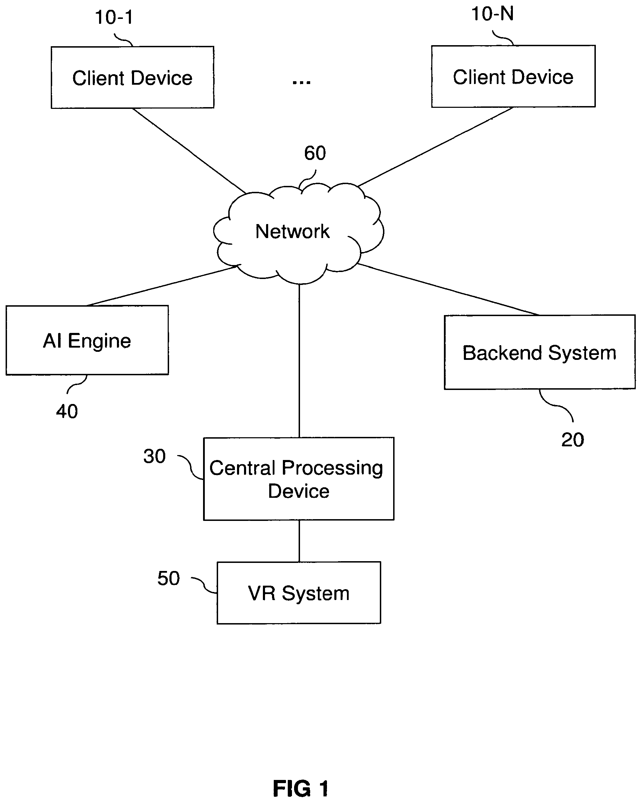

**Fig. 1** shows an example of a network system. As shown in Fig. 1, the exemplary network system may comprise a plurality of client devices 10-1, ..., 10-N (hereinafter, also referred to simply as "client device 10" or "client devices 10"), a backend system 20, at least one central processing device 30 and an AI engine 40, which are connected with each other via a network 60. The network 60 may include the Internet and/or one or more intranets. The client devices 10, the backend system 20, the central processing device 30 and the AI engine 40 may be connected to the network 60 via a wireless and/or wired connection.

In the exemplary network system shown in Fig. 1, the client devices 10 may generate streaming data relating to a plurality of client objects. A client object may be an entity, data relating to which may be processed by the central processing device 30. In the exemplary embodiment for monitoring network traffic, a client object may be one of the client devices 10 and the central processing device 30 may process data representing a state of network traffic to and/or from the client device 10 as the client object.

The streaming data generated by the client devices 10 may be, if necessary after pre-processing that will be described later in more detail, sent to the central processing device 30 for further processing.

The client devices 10 may each be a computer such as a personal computer, a server computer, a workstation, etc. In some examples, at least one of the client devices 10 may be a mobile device such as mobile phone (e.g. smartphone), a tablet computer, a laptop computer, a personal digital assistant (PDA), etc. In some examples, at least one of the client devices 10 may be a network device such as a router, a hub, a bridge, etc. The client device 10 may be present in different locations and one or more of the client devices 10 may change its or their location(s) over time (e.g., in particular in case the client device 10 is a mobile device).

The backend system 20 may be a computer system that is configured to implement a software application that uses the data processed by the central processing device 30. In other words, the backend system 20 may define specific type and/or use of the data processed by the central processing device 30. Further, the backend system 20 may define tasks to be performed by a user of the central processing device 30 with respect to the data processed by the central processing device 30.

In the exemplary embodiment, the backend system 20 may provide a software application for monitoring network traffic in the exemplary network system. For example, the backend system 20 may determine occurrences of network failures based on the data that represents states of the network traffic, notify a user (e.g., network administrator) of the determined network failures and, if necessary, enable a user to perform one or more actions to resolve the determined network failures.

In the exemplary embodiment, the client devices 10 may be configured to generate streaming data including data representing states of network traffic. A state of network traffic to and/or from a client device may include, for example, a speed and/or type of data transmitted from and/or to the client device. Additionally or alternatively, the state of network traffic may include, for example, information indicating an error in the network system. For example, a router (as an example of the client device 10) may detect that a device (which may also be an example of the client device 10) connected to the router is not responding to a message within an expected time period. In such a case, the router may generate data indicating an error state of the non-responding device. Moreover, a state of network traffic to and/or from a client device may include a physical and/or logical location of the client device. The state of the network traffic may vary over time. Accordingly, the streaming data may include data of changing states of the network traffic.

The streaming data generated by the client devices 10 may be pre-processed for further processing by the central processing device 30. For example, state data relating to one or more of the client devices 10 (client objects in this exemplary embodiment) may be derived from the streaming data. The state data may include, with regards to each of the one or more of the client devices 10, a combination of identification information of the client device 10 and information indicating a state of the network traffic to and/or from the client device 10. The state data may be in a format that can be understood (e.g. parsed, interpreted, etc.) by the central processing device 30. In some examples, the pre-processing of the streaming data to obtain the state data can be performed by the client devices 10 in accordance with the software application provided by the backend system 20. Alternatively or additionally, the pre-processing of the streaming data may be performed by the backend system 20.

The state data derived from the streaming data may be sent to the central processing device 30. The central processing device 30 may be configured to process the state data derived from the streaming data generated by the client devices 10. For example, the central processing device 30 may process the state data to visualize the states of client objects (the client devices 10 in this exemplary embodiment) in real time. The visualized states of the client objects may be provided to a user of the central processing device 30 using a virtual reality (VR) system 50 connected to the central processing device 30 via an interface (not shown) for the VR system 50, for example. The VR system 50 may be a known system that can provide a VR environment to a user.

The AI engine 40 may be configured to provide a user of the central processing device 30 with information suggesting an action to be taken by the user based on the state data received by the central processing device 30. For example, the AI engine 40 may be in communication with the central processing device 30 and the backend system 20 and suggest an action from among available actions to be taken by the user in accordance with the backend system 20, based on the state data received by the central processing device 30. The AI engine 40 may learn which action to suggest to the user, based on one or more inputs from the user received in response to the suggestion made by the AI engine 40.

It should be noted that Fig. 1 shows a mere example of a network system and the configuration of the network system is not limited to that shown in Fig. 1. For instance, the network system may comprise more than one central processing devices 30. Different processing devices 30 may be present in different locations. In case the network system comprises a plurality of central processing devices 30, the backend system 20 may be configured to synchronize the state data to be received by the plurality of central processing devices 30 so that all of the central processing devices 30 can have the same real time view on the actual states of client objects.

According to one preferred embodiment synchronization is ensured by the network protocol that is used, as an example by MQTT. MQTT is no client-server protocol, but rather a broker-subscriber model. When a message is published, e.g. for a certain queue, each subscriber will receive it. Preferably, each subscriber will receive the message as long as the subscriber has subscribed to said queue. This also includes offline time of individual subscribers, if configured so. In the context of an embodiment of this application synchronization may mean that each subscriber will, at some point, receive each message, if configured so. In the context of this application synchronization may also mean that each subscriber, if connected, will receive the message at the approximately same time. According to a preferred embodiment, the backend system 20 does the pre-processing and the synchronization, e.g. by using MQTT as protocol. The pre-processing happens before sending out the processed message to each client. Advantageously thereby compute time is saved, since each processing is only done once.

Further, although the backend system 20, central processing device 30 and the AI engine 40 are shown as separate elements in Fig. 1, in some examples, at least two of these elements may be integrated into a single system.

### Functional Configurations for Real Time Data Processing

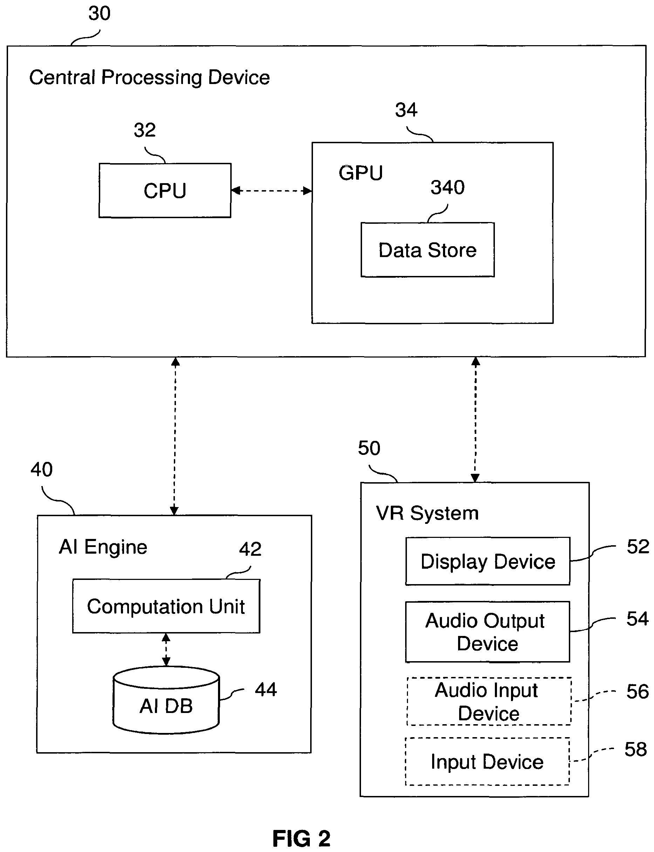

**Fig. 2** shows an exemplary functional block diagram of the central processing device 30, the AI engine 40 and the VR system 50.

As shown in Fig. 2, the central processing device 30 may comprise a central processing unit (CPU) 32 and a graphics processing unit (GPU) 34. The CPU 32 may be configured to receive state data derived from streaming data generated at the client devices 10 as stated above. The state data may relate to one or more of the client objects (which may be the client devices 10 in this exemplary embodiment). In this exemplary embodiment, the state data of each client device 10 may be a state relating to network traffic to and/or from the client device 10, as stated above.

The CPU 32 may be further configured to forward, to the GPU 34, the received state data as update information relating to the one or more of the client objects. In some examples, the CPU 32 may forward the received state data as the update information to the GPU 34 in a predetermined time interval e.g., 10 ms. The time may be derived from the aspired frame rate. As an example, for obtaining 100 frames per second an interval less or equal to 10ms would be required. Advantageously, frame rates of at least 60fps are obtained thus providing user-friendly result, similar to conventional graphics applications, such as video games. Further advantageously, even higher framerates are obtained, i.e. greater than 60 fps, e.g. 100 fps, thereby resulting in user friendly display in virtual reality devices. Most preferred, the range may be from 60 fps (i.e. 16.6ms) up to "unlimited fps" (close to 0 ms).

For instance, the CPU 32 may simply forward, to the GPU 34, all the state data received during the predetermined time interval as the update information. Alternatively, the CPU 32 may include, in the update information to be forwarded to the GPU 34, for each of the one or more of the client objects, information indicating the state of the client object and having been received latest during the predetermined time interval. This may ensure that the GPU 34 will receive the latest state arrived during the predetermined time interval at the CPU 32 for each client object.

In this exemplary embodiment, the update information may include, with respect to each of the one or more of the client devices 10, a combination of identification information of the client device 10 and information indicating a state of the network traffic to and/or from the client device 10.

The GPU 34 may be a processor configured to perform processing concerning graphic images. The GPU 34 may comprise a plurality of processors (e.g. cores) that can perform parallel processing. The GPU 34 may further comprise a data store 340 for storing one or more attributes of each client object (each client device 10 in this exemplary embodiment). For example, each client object may be allocated a storage area within the data store 340 for storing the attributes of the client object. Further, the GPU 34 may access the storage areas allocated for a plurality of client objects in parallel, e.g. with the plurality of processors. The attributes may be information that are necessary for performing rendering to display, on a display device, image objects corresponding to the client objects. The data store 340 of the GPU 34 may further store a state of each client object. For example, in a similar manner for the attributes, each client object may be allocated a storage area within the data store 340 for storing the state of the client object and the GPU 34 may access the storage areas for a plurality of client objects in parallel with the plurality of processors. In this exemplary embodiment, the data store 340 may store, for each client device 10, a state relating to network traffic to and/or from the client device 10.

The GPU 34 may be configured to receive the update information from the CPU 32. Further, the GPU 34 may update the attributes in the data store 340, using the received update information, for each of the one or more of the client objects to which update information relates. For example, the GPU 34 may calculate the attributes for each client object according to the state of the client object included in the update information. The GPU 34 may perform the update in parallel for each client object since the GPU 34 may access the storage areas within the data store 340 allocated for attributes of a plurality of client objects as stated above.

The GPU 34 may be further configured to perform, for each client object, rendering using the attributes of the client object stored in the data store 340 to display, on a display device, a plurality of image objects corresponding to the client objects. The display device may be a display device comprised in the VR system 50. The GPU 34 may perform the rendering in parallel for each client object since, as stated above, the GPU 34 may access the storage areas within the data store 340 allocated for attributes of a plurality of client objects.

In some examples, the GPU 34 may perform the update of the attributes and the rendering for each client object every time the GPU 34 receives the update information from the CPU 32. Thus, in case the CPU 32 forwards the update information to the GPU 34 in a predetermined time period as stated above, the GPU 34 may also perform the update and the rendering in the predetermined time period.

The VR system 50 may be implemented with a VR headset that is configured to provide a VR environment to a user. The VR system 50 may comprise a display device 52 (e.g., a screen to be placed in front of the eyes when the VR headset is worn by a user), an audio output device 54 (e.g., a speaker or a headphone, etc.) and an audio input device 56 (e.g., microphone), for example. Instead of or in addition to the audio input device 56, the VR system 50 may comprise an input device 58 configured to receive one or more user inputs. For example, the input device 58 may be configured to detect positions and/or movements of at least a part of the user's hand(s), which may be interpreted as the user input(s). Alternatively, for example, the input device 58 may be a known controller device that is configured to receive one or more user inputs by detecting one or more buttons (e.g. switches) being pressed and/or the controller being moved by the user. In some examples, the VR system 50 may further comprise a haptic device (not shown) that is configured to provide haptic feedback to a user.

The AI engine 40 may be configured to provide an interface to a user of the central processing device 30 as to how to interact with the displayed data. In other words, the Al engine 40 may provide an interface for man-machine interaction with regards to the user of the central processing device 30 and the network system. The Al engine 40 may comprise a computation unit 42 and an Al database (DB) 44.

The computation unit 42 may be configured to perform computation for the Al to provide information suggesting an action to be taken by the user based on the state data received by the central processing device 30. For example, the computation unit 42 of the Al engine 40 may obtain the state data from the CPU 32 and perform computation to determine a suggested action to be taken by the user. Alternatively or additionally, the computation unit 42 may obtain states of the client objects from the GPU 34 in the examples where the data store 340 of the GPU stores the states of the client objects. The computation unit 42 may perform the computation in accordance with a known machine learning technique such as artificial neural networks, support vector machine, etc. The suggestion determined by the computation unit 42 may be sent to from the AI engine 40 the central processing device 30 via the network 60 and may then be provided to the user by outputting the information representing the suggestion using the display device 52 and/or the audio output device 54 of the VR system 50. Alternatively, the Al engine 40 itself may be connected to the VR system 50 and provide the information representing the suggestion directly to the VR system 50. As will be described more in detail later below, the user may provide one or more inputs using the audio input device 56 and/or the input device 58 of the VR system in response to the suggestion by the AI engine 40. Additionally or alternatively, the user input(s) in response to the suggestion by the AI engine 40 may be input via an input device (not shown) of the central processing device 30, such as a mouse, keyboard, touch-panel, etc. The user input(s) to the VR system may be sent back to the AI engine 40 directly or via the central processing device 30 and the network 60. The user input(s) may further be forwarded to the backend system 20. The computation unit 42 may further perform computation to learn which action to suggest to the user, based on the user input(s) in response to the suggestion by the AI engine 40. The backend system 20 may also provide some feedback to the AI engine 40 concerning the user input(s) and the AI engine 40 may use the feedback from the backend system 20 for the learning.

The AI DB 44 may store data that is necessary for the computation performed by the computation unit 42. For example, the AI DB 44 may store a list of possible actions to be taken by the user. The list of possible actions may be defined in accordance with the software application implemented by the backend system 20. For example, in the exemplary embodiment of monitoring network traffic, the possible actions may include, but are not limited to, obtaining information of a client device 10 with an error (e.g., no data flow, data speed slower than a threshold, etc.), changing software configuration of a client device 10 with an error, repairing or replacing a client device 10 with an error, etc. The AI computation unit 42 may determine the action to suggest to the user from the list stored in the AI DB 44.

Further, for example, the AI DB 44 may store data for implementing the machine learning technique used by the computation unit 42. For more specific example, in case the computation unit 42 uses an artificial neural network, the AI DB 44 may store information that defines a data structure of the neural network, e.g., the number of layers included in the neural network, the number of nodes included in each layer of the neural network, connections between nodes, etc. Further, the AI DB 44 may also store values of the weights of connections between the nodes in the neural network. The computation unit 42 may use the data structure of the neural network and the values of the weights stored in the AI DB 44 to perform computation for determining the suggested action, for example. Further, the computation unit 42 may update the values of the weights stored in the AI DB 44 when learning from the using the user input(s).

### Real Time Data Visualization Processing

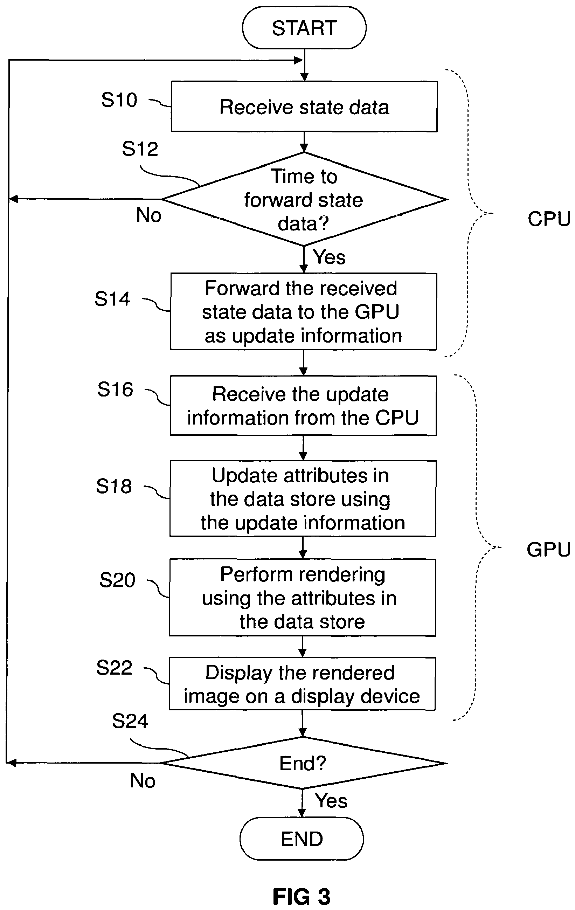

In the following, exemplary processing for visualizing incoming data in real time will be described with reference to **Fig. 3****.** In the exemplary embodiments and various examples described herein, the state data relating to client objects may be visualized on a display device, e.g. in a virtual space provided by the VR system 50. Image objects corresponding to the client objects may be animated. Thus, the image objects may move over time and/or change their visualization (e.g. appearance such as form, color, etc. and/or the ways they move, e.g. speed, direction of movement, etc.) over time. The movement and/or the change of visualization of the image objects may correspond to changes in states of the corresponding client objects. In addition, sound corresponding to the animation of the image objects may be generated and output via, e.g. the audio output device 54 of the VR system 50.

**Fig. 3** shows a flowchart of an exemplary processing performed by the central processing device 30 for visualizing incoming data in real time.

In Fig. 3, steps S10 to S14 and S 24 may be performed by the CPU 32 of the central processing device 30 and steps S16 to S22 may be performed by the GPU 34 of the central processing device 30.

The exemplary processing shown in Fig. 3 may be started in response to an input by a user of the central processing device 30, instructing display of data, for example.

In step S10, the CPU 32 may receive state data derived from streaming data generated at the client devices 10. The state data may relate to one or more of the client objects. In the exemplary embodiment of monitoring network traffic, the client objects may be the client devices and the state data of each client device 10 may be a state relating to network traffic to and/or from the client device 10. The processing may proceed to step S12 after step S10.

In step S12, the CPU 32 may determine whether or not the time to forward the received state data to the GPU 34 has come. For example, in case the CPU 32 is configured to forward the state data in a predetermined time interval, the CPU 32 may determine whether or not the predetermined time interval has passed since the CPU 32 forwarded the state data for the last time. If the predetermined time interval has passed, the CPU 32 may determine that it is time to forward the received state data. If the predetermined time interval has not yet passed, the CPU 32 may determine that it is not yet time to forward the received state data.

When the CPU 32 determines that the time to forward the received state data has come (Yes in step S12), the processing may proceed to step S14. Otherwise (No in step S12), the processing may return to step S10.

In step S14, the CPU 32 may forward the received state data to the GPU 34 as update information relating to the one or more of the client objects. In some examples, the CPU 32 may forward to the GPU 34 all the state data received during the predetermined time interval as the update information. In other examples, the CPU 32 may include, in the update information to be forwarded to the GPU 34, for each of the one or more of the client objects, information indicating the state of the client object and having been received latest during the predetermined time interval. In other words, for each client object, the latest state arrived at the CPU 32 during the predetermined time interval may be forwarded to the GPU 34.

In step S16, the GPU 34 may receive, from the CPU32, the update information relating to the one or more of the client objects. In the exemplary embodiment of monitoring network traffic, the update information may include, with respect to each of the one or more of the client devices 10, a combination of identification information of the client device 10 and information indicating a state of the network traffic to and/or from the client device 10.

In step S18, the GPU 34 may update attributes in the data store 340 using the received update information, for each of the one or more of the plurality of client objects to which the update information relates. For example, the GPU 34 may calculate the attributes for each client object according to the state of the client object included in the update information. Since the update information includes information indicating a state of each of the one or more of the client objects, the calculated attributes of each client object may reflect the state of the client object. The calculated attributes may be (over)written in the storage area within the data store 340, allocated for the corresponding client object. The update may be performed in parallel for each client object since the GPU 34 may access the storage areas within the data store 340 allocated for attributes of a plurality of client objects as stated above.

In some examples, the calculation of the attributes to update the attributes in step S18 may be performed using a compute shader which is a computer program that runs on the GPU 34 and that makes use of the parallel processing capability of the GPU 34. The compute shader may be implemented using a known library for graphics processing, such as Microsoft DirectX or Open Graphics Library (OpenGL).

For updating the attributes in step S18, the compute shader may assign a state of a client object included in the received update information to a storage area within the data store 340. For example, in case the GPU 34 has received a state of a particular client object for the first time (e.g. no storage area has been allocated yet for the particular client object), the compute shader may assign the particular client object to a new storage area within the data store 340. On the other hand, for example, in case the GPU 34 has received a state of a particular client object for the second or subsequent time (e.g. a storage area has already been allocated for the particular client object), the compute shader may identify the storage area within the data store 340 for the particular client object using, e.g. the identification information of the particular client object included in the update information. The compute shader may store states of the client objects in the corresponding storage areas within the data store 340.

Further, the compute shader may allocate a storage area within the data store 340 for storing attributes of each client object in a manner analogous to that for the state of each client object as stated above.

The compute shader may then calculate updated attributes for each of the client objects which the received update information relates to. The attributes of each client object may be based on the state of the client object. The attributes of each client object may be information necessary for rendering and may include, for example, position, color, size, distortion and/or texture of a corresponding image object to be displayed. The position included in the attributes may be considered as a "zero-point" (e.g., origin) of the image object, for example in the VR space. The positions of the image objects may be determined based on the similarity of the states of the corresponding client objects. For example, image objects corresponding to client objects with states that are considered to be similar may be arranged close to each other. The similarity of the states of two client objects may be determined by, for example, the distances between the physical and/or logical locations of the two client objects (e.g. client devices 10). The attributes may further include sound to be output in accordance to the state of the client object.

Moreover, in some examples, the compute shader may calculate, for each client object, a (virtual) distance between a position of the corresponding image object and a position of the user's hand(s) and/or a controller device (as an example of the input device 58) in the VR system 50. The calculation of the distance may be used for detecting user interaction of "grabbing" and/or "picking up" of the image object in the VR environment provided by the VR system 50. Here, "grabbing" and/or "picking up" of the image object may be understood to be overriding the position of the image object with the position of the user's hand(s) and/or the controller device (e.g. the input device 58 of the VR system 50). The calculated distance may also be stored in the data store 340 as a part of the attributes. According to an embodiment, the calculation happens every frame, so this information would be obsolete quickly and needs not be stored.

After step S18, the processing may proceed to step S20.

In step S20, the GPU 34 may perform, for each client object, rendering using the attributes of the client object stored in the data store 340 to display, on a display device, a plurality of image objects corresponding to the client objects. The GPU 34 may perform the rendering in parallel for each client object since the GPU 34 may access the storage areas within the data store 340 allocated for attributes of a plurality of client objects.

In some examples, the plurality of image objects to be displayed may be 3D image objects. Each 3D image object may comprise a plurality of polygons. The GPU 34 may have access to a description and/or a list of all relative offsets for each polygon. The description and/or list may be stored in the data store 340 or another storage device accessible by the GPU 34. The description and/or list may be common for all the 3D image objects to be displayed, since the base form may be the same for all the 3D image objects. In the rendering step of S20, the GPU 34 may obtain the "zero-point" of each image object from the attributes stored in the data store 340 and calculate, based on each "zero-point", relative positions of the polygons of the corresponding 3D image object using the description and/or list of all relative offsets for each polygon. 3D image objects with different sizes may be rendered by applying multiplication operation to the relative offsets, in accordance with the size of each image object indicated in its attributes stored in the data store 340. Further, according to other attributes such as color, distortion and/or texture of the image objects stored in the data store 340, the GPU 34 may determine the final position, orientation, color, etc. of each polygon comprised in the image objects.

In some examples, the rendering in step S20 may be performed using a vertex shader and a fragment shader which are computer programs that run on the GPU 34. The vertex shader may perform processing for each individual vertex of each polygon comprised in each 3D image object. For example, the vertex shader may determine a specific position of the individual vertex on the display device using the attributes of each 3D image object as stated above. It is noted that the attributes of each 3D image object calculated and stored in the data store 340 may be structured in a manner such that the vertex shader may obtain only information that is necessary for the rendering. The fragment shader may perform processing for each pixel of an overall image including the 3D image objects to be displayed. The fragment shader may take the output of the vertex shader as an input and determine, for example, a color and a depth value of each pixel. Like the computer shader as mentioned above, the vertex shader and the fragment shader may also be implemented using a known library for graphics processing, such as Microsoft DirectX or OpenGL.

In other words, each vertex is derived from the "common list of vertices", that all objects share. Hence, for all vertices of one object, only one set of attributes is necessary.

Further, in step S20, for client objects with attributes indicating sound to be output, the CPU 32 may also generate instructions to output the sound in accordance with the attributes. The instructions may be provided to the VR system 50.

Specifically, sound may be played when updates are sent to the GPU 34. If the time to update has come, a sound is played. This is possible because, advantageously the CPU 32 is not under heavy load as the GPU 34 is doing all computations for the visualization. Sound may be played in accordance to the pre-processed state, the CPU 32 receives. The sound that has to be played can be determined from the state without further processing. As an example, if the state == 1, play sound 1. If state == 2, play sound 2. This may be done for each object's state. In other words, sound may be played in accordance with the state, not the attributes.

According to another embodiment, the GPU 34 the above, i.e. providing and playing sound, may be carried out by the GPU.

After the rendering in step S20, the processing may proceed to step S22.

In step S22, the GPU 34 may display the rendered image on a display device, for example, on the display device 52 of the VR system 50. For example, the GPU 34 may provide the display device 52 of the VR system 50 with the data of the rendered image.

Further, in case instructions for outputting sound are generated in step S20, the CPU 32 (or, according to another embodiment the GPU 34) may provide the VR system 50 with the instructions for outputting the sound. The audio output device 54 of the VR system 50 may output sound according to the instructions.

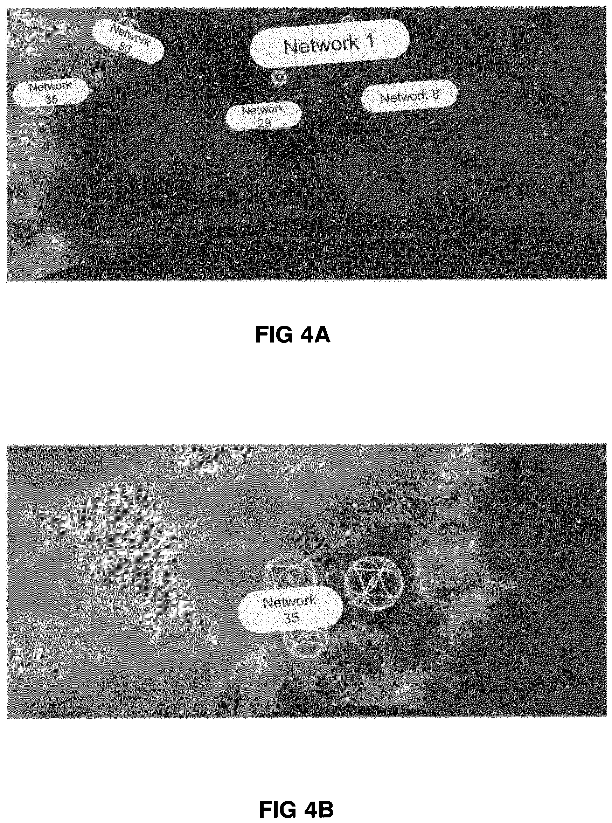

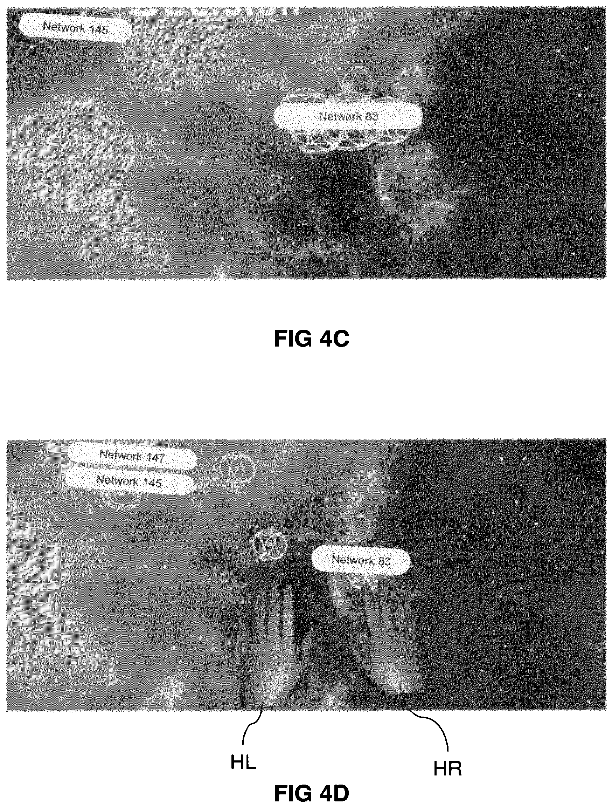

**Figs. 4A to 4F** at least parts of exemplary images that may be shown on a display device 52 of the VR system 50 by the central processing device 30 in step S22. Spheres shown in Figs. 4A to 4F are exemplary image objects corresponding to the client objects (e.g. client devices 10 in the exemplary embodiment for network traffic monitoring). The elements "Network 1", "Network 8", "Network 29", "Network 35", "Network 83", etc. shown in Figs. 4A to 4F may correspond to physical and/or logical locations of the client devices 10 included in the network system that is being monitored. In other words, these elements in Figs. 4A to 4F may correspond to parts of the network system that is being monitored. For example, each of these elements in Figs. 4A to 4F may correspond to a part of the network which is under control of a particular router. Alternatively or additionally, each of these elements may correspond to a part of the network which is installed in a particular building (or a particular room of a particular building), for example. Further, some of these elements shown in Figs. 4A to 4F may correspond to parts of the network which may be accessed by certain groups of users (e.g., users belonging to particular organizations such as companies, research institutes, universities, etc.). Accordingly, the spheres shown close to and/or overlapping with one of these elements in Figs. 4A to 4F may indicate that the corresponding client devices 10 belong to the corresponding parts of the network system. Further, the appearance (e.g, color, texture, size, etc.) and/or movement of each image object may represent the state of the corresponding client device 10, e.g. the state of the network traffic to and/from the corresponding client device 10. For instance, when a network failure occurs with respect to a client device 10, the image object corresponding to the client device 10 may be shown in a certain color (e.g., red) and/or in a certain manner (e.g., blinking).

After step S22, the processing may proceed to step S24.

In step S24, the CPU 32 may determine whether or not to end the processing shown in Fig. 3. For example, if the user of the central processing device 30 inputs, via the audio input device 56 or the input device 58 of the VR system 50 or another input device not shown, an instruction to end the processing, the CPU 32 may determine to end the processing and the processing may end (Yes in step S24). In case the CPU 32 may determine not to end the processing (No in step S24), the processing may return to step S10.

According to the exemplary processing described above with reference to Fig. 3, the attributes of each client object may be (re)calculated for each frame before rendering (see e.g., step S18). Thus, changes in states of client objects may be reflected in each rendered frame.

Further, according to the exemplary processing described above with reference to Fig. 3, in particular by the rendering step S20 using the description and/or list of all relative offsets for each polygon and the "zero-point" of each image object, computational resources required for the rendering may be reduced. For example, assume that each 3D image object has 3000 polygons and 10000 instances of these objects are to be rendered. If data of the 3000 polygons for each instance are maintained, data of 30 million polygons needs to be maintained. However, with a hierarchical approach using a common description and/or list of all relative offsets for each polygon as stated above, the amount of data to be maintained can be reduced to data of one array (or list) describing the 3D image object with 3000 polygons and a list of 3D image objects with parameters (e.g. 10000 image objects with, for example, 12 attributes which may result in 3 of 4-component-vectors each). Thus, in this exemplary case, instead of 30 million vectors of data, data of 33000 vectors, for instance.

The hierarchical approach as stated above may fit to the general GPU architecture. The use of a common description of relative offsets for each polygon for the same or similar objects may be applied in a known rendering processing, for e.g. rendering grass or hair. However, grass or hair may be considered "imprecise", since, for example, the angle of a hair may not be deeply meaningful. In contrast, in the exemplary embodiments and various examples described herein, the calculations for rendering each image object can be more meaningful, as the client objects corresponding to the image objects may have individual meaning and/or significance. For example, each image object may correspond to a client device 10 in the network system that is being monitored and the state of the client device 10 represented by the appearance and/or movement of the image object may correspond to the network traffic to and/or from the client device 10. Further, in a known rendering system, e.g. in a video game, calculations for rendering objects with individual meaning and/or significance (e.g. player models) are usually performed by the CPU, since there are usually not comparable amounts of "meaningful" objects. In contrast, in the exemplary embodiments and various examples described herein, the calculations for rendering are performed by the GPU.

Accordingly, the exemplary processing as described above with reference to Fig. 3 may achieve a high framerate that is high enough to receive a stutter-free output. Further, the GPU effort may be maximized, for example, to around 100 frames per second, up to 15000 objects with 3000 polygons each, 4.5 billion animated/moving polygons per second. Such a result may not be obtained with CPU-controlled calculations. Further, render effects may be calculated based on the partially computer-generated geometry (e.g. vertices).

### User Interaction and Al

The network system and the processing of visualization as stated above with reference to Figs. 1 to 3, state data of the client objects may be rendered into a VR environment. Thus, a plurality of events that may trigger change of states of the client objects may be displayed in the VR environment. The user of the central processing device 30 can obtain a different view and understanding on the overall displayed data leveraging the user's spatial comprehension. Through the VR system 50 and the central processing device 30, the user may interact with the system and manipulate the data in real time.

For interaction with the system, the user may use the audio input device 56 and/or the input device 58 of the VR system 50. In case of using the audio input device 56, the user may speak to the audio input device 56 and the user speech may be interpreted by the VR system 50. In this case, the VR system 50 may comprise a speech recognition system for interpreting the speech of the user.

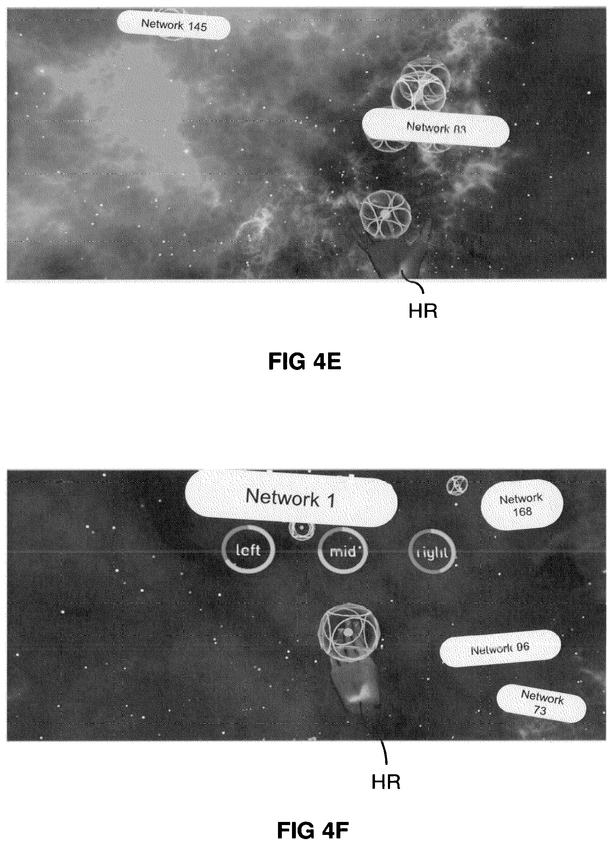

Further, for example, the user may use the input device 58 of the VR system 50 to select one or more image objects for obtaining data relating to the corresponding client objects. For instance, the user may activate or select a client object by "grabbing" or "picking up" an image object by his/her hand in the VR environment, which may be detected by the input device 58 of the VR system 50 (see e.g., Figs. 4E and 4F, the user's virtual right hand HR is "grabbing" or "picking up" a sphere, an exemplary image object). Alternatively, for example, in case the input device 58 is a controller device, the user may touch and/or point to an image object with the controller device. In response to the activation / selection of an image object by the user, the central processing device 30 may display the state data of the corresponding client object stored in the data store 340 of the GPU and/or data relating to the corresponding client object in a database of the backend system 20. Activation / selection of an image object by the user would be reflected in the backend system 20; in the backend system 20 the selection/activation would be registered accordingly.

To facilitate user interaction, the AI engine 40 may, in parallel to the display of the image objects by the central processing device 30 as described above, provide information for steering and/or guiding the user of next possible interactions in the VR environment, via the display device 52 and/or the audio output device 54 of the VR system 50. For example, the AI engine 40 may provide audio speech with the audio output device 54 of the VR system to, e.g., inform the user what to focus on, ask the user how to deal with the displayed data, guide the user to next tasks, etc. The AI engine 40 may learn based on the user's interactions and/or decisions. Alternatively or in addition, the AI engine 40 may provide the information to the user via the display device 52 of the VR system in a natural language text.

The suggestions provided for the user may relate to tasks defined by the software application of the backend system 20 (e.g., monitoring and/or managing network traffic, resolving network failure, etc.). With the user's interactions and/or decision, the AI engine 40 may be trained on future interactions and/or decisions on how to perform on similar processes and/or patterns in the future. As the learning proceeds, human interactions for repetitive tasks may be reduced and the tasks may be automated by the AI engine 40.

The AI engine 40 does not necessarily be trained before use with the central processing device 30. In some examples, at the time of starting using the AI engine 40, the AI DB 44 may include no learning result to be used for making suggestions to the user according to the machine learning technique employed by the AI engine 40. In other words, the AI DB 44 may be "blank" with respect to the learning result. In such a case, at the time of starting using the Al engine 40, the AI DB 44 may merely include a list of possible actions to be taken and initial information concerning the machine learning technique employed. For example, in case the Al engine 40 uses an artificial neural network, the AI DB 44 may include the data structure of the artificial network and initial values of weights of connections between nodes of the artificial neural network.

When no (or little) learning result is stored in the Al DB 44, the AI engine 40 may not be able to determine an action to be suggested to the user. In case the AI engine 40 fails to determine an action to be suggested to the user, the AI engine 40 may output, using the audio output device 54 and/or the display device 52 of the VR system 50, information to ask the user to make a decision without the suggestion from the Al engine 40 and then monitor user inputs to the VR system 50 in response to the output of such information. Thus, the Al engine 40 may ask for a decision by the user every time a new situation (e.g. combination of state data) comes up. Alternatively, the AI engine 40 may monitor user inputs to the VR system 50 without outputting any information. In any case, the AI engine 40 may learn (in other words, train the Al) according to the machine learning technique employed, using the state data obtained from the central processing device 30 and the monitored user inputs to the VR system 50. Accordingly, the AI engine 40 may be trained by the user for so-far-undefined action(s) (e.g. solution(s)) for a task and, when the same or similar situation occurs for the next time, the AI engine 40 may automatically perform the learnt action(s) for the task. Here, the same learnt actions may be taken not only for the same situation and/or task but also for a similar situation and/or task. The granularity of "similar" situation and/or task can be defined according to the needs of the software application implemented by the backend system 20.

### Variations

The exemplary embodiment and examples as stated above relate to monitoring network traffic of the network system. However, other exemplary embodiments and examples may relate to different applications.

For example, a client object may be a user of at least one of the client devices 10 and the central processing device 30 may process data relating to one or more activities performed by the user using the at least one of the client devices. In this respect, the backend system 20 may implement a software application for managing data relating to users of the client devices 10 and/or providing one or more services to users of the client devices 10. Examples of such a software application may include, but are not limited to, SAP Hybris Marketing, SAP Hybris Loyalty, SAP Hybris Profile, SAP Hybris Commerce and any other connected SAP / SAP Hybris tools.

For specific example, assume that client objects are users (e.g. customers) of an online shopping website and/or a physical shop. In case of customers of an online shopping website, the customers may access the online shopping website using the client devices 10. In case of customers of a physical shop, each customer of a physical shop may carry a mobile device (which may be an example of the client device 10) in the shop and the mobile device may generate streaming data concerning the customer's activities in the shop. In either case, the customer may enter his/her user ID on the client device 10 and the user ID may be included in the state data to be received by the central processing device 30.

In this specific example, the state data of a client object may indicate activities of the corresponding customer. In case of a customer of an online shopping website, activities of the customer may include, but are not limited to, browsing or exploring the website, searching for a certain kind of products, looking at information of a specific product, placing a product in a shopping cart, making payment, etc. The information indicating such activities on the website may be collected from, for example, the server providing the website and/or the browser of the client device 10 with which the customer accesses the website.

In case of a customer of a physical shop, the activities of the customer may include, but are not limited to, moving within the physical shop, (physically) putting a product in a shopping cart, requiring information concerning a product, talking to a shop clerk, etc. The information indicating such activities may be collected by the client device 10 (e.g. mobile device) carried by the customer. For example, the client device 10 may be configured to detect the location and/or movement of the customer with a GPS (Global Positioning System) function. Further, for example, a label with computer-readable code (e.g. bar code, QR code, etc.) indicating information of a product and/or an RFID tag containing information of the product may be attached to each product in the physical shop and the client device 10 may be configured to read the computer-readable code and/or the information contained in the RFID tag. The customer may let the client device 10 read the computer-readable code and/or the information contained in the RFID tag and input to the client device 10 information indicating his/her activity regarding the product (e.g., putting the product in a shopping cart, requiring information, ordering the product, etc.). The client device 10 may then generate data indicating the activity of the customer specified by the product information and the user input indicating the activity. Further, for example, when the customer talks to a shop clerk, the shop clerk may input his/her ID to the client device 10 carried by the customer and the client device 10 may generate data indicating that the customer is talking to the shop clerk.

In this specific example, each image object displayed on the display device 52 of the VR system 50 may correspond to a customer. Further, the position of the image object to be displayed may correspond to, for example, the type of activity the user is performing on the website.

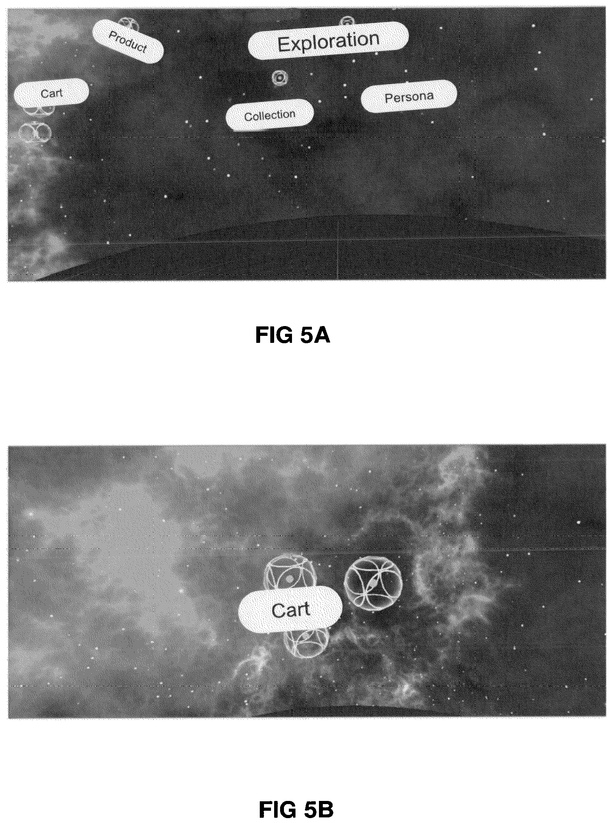

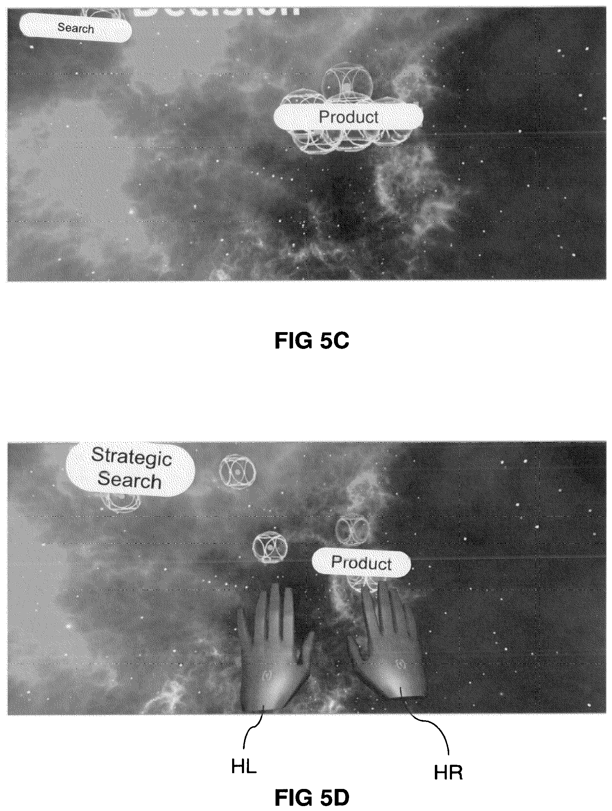

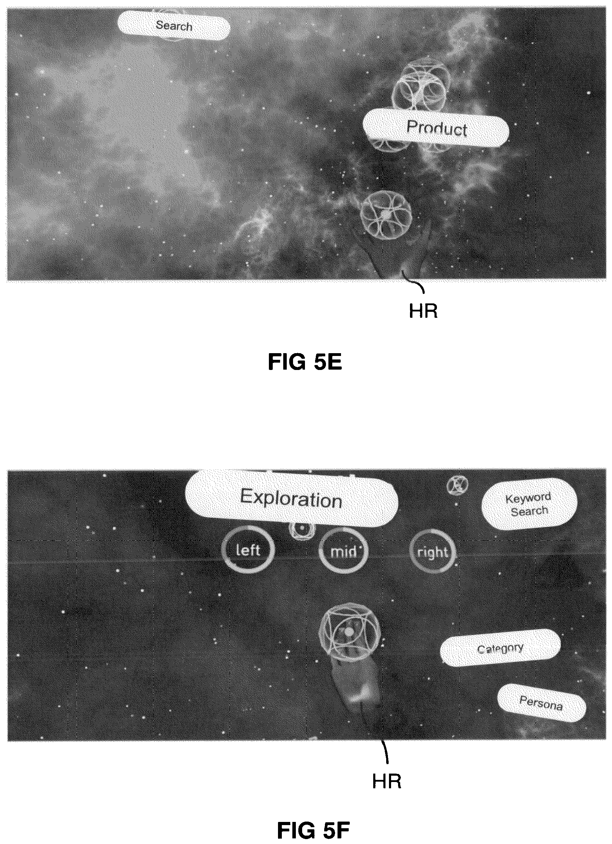

**Figs. 5A to 5F** show at least parts of exemplary images that may be shown on a display device 52 of the VR system 50 by the central processing device 30 in this specific example. Spheres shown in Figs. 5A to 5F are exemplary image objects corresponding to the customers. Terms such as "Exploration", "Cart", "Product", "Search", "Category", "Persona", "Keyword Search", shown in Figs. 5A to 5F correspond to the types of activities the customers may perform on the website. For example, spheres shown close to and/or overlapping with one of those terms may indicate that the customers corresponding to the spheres are currently performing the activity indicated by the term (see e.g., spheres shown close to or overlapping with the term "Cart" in Fig. 5B, with the term "Product" in Figs. 5C and 5E).

In this specific example, the AI engine 40 may suggest the user of the central processing device 30 to provide assistance to the customers of the online shopping website. For instance, when a customer is looking at the same product or same kinds of products for longer than a predetermined threshold of time but not placing any product in the shopping cart, the customer may have a problem and/or need assistance in determining the product. In such a situation, the AI engine 40 may suggest the user of the central processing device 30 to contact the customer of the website via, e.g., online chat system to provide any assistance the customer may need.

As stated above, the user of the central processing device 30 may interact with the displayed data using the VR system 50. Also in this specific example, as can be seen in Figs. 5D to 5F, the user of the central processing device 30 may use his/her hand(s) to virtually "grab" or "pick up" a sphere in the image (see virtual hands HL, HR in Figs. 5D to 5F). In some circumstances, the central processing device 30 and/or the AI engine 40 may show information concerning the customer corresponding to the sphere which is "picked up" by the user of the central processing device 30 on the display (see e.g., Fig. 5F, information relating to the corresponding customer may be shown in places where the terms, "left", "mid" and "right", placed in circles). The information concerning the customer may be obtained from, for example, a database of the backend system 20 that may maintain and manage profiles of customers (e.g., with SAP Hybris Profile).

Further, although the exemplary embodiments and examples described herein use the VR system 50 for displaying data and providing interface for user interaction, the display of data and user interaction may be performed using a computer and a display device that do not use VR technique. For example, devices such as a personal computer, a tablet computer, a smartphone, etc. may be used for displaying data and providing interface for user interaction.

### Hardware Configuration

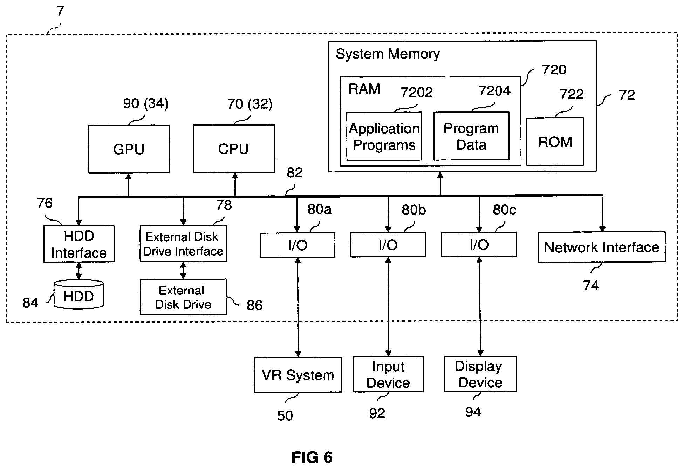

**Fig.** 6 shows an exemplary hardware configuration of a computer that may be used to implement the client device 10, the backend system 20, the central processing device 30 and/or the AI engine 40. The computer 7 shown in Fig. 6 includes a CPU 70 (32), a GPU 90 (34), a system memory 72, a network interface 74, a hard disk drive (HDD) interface 76, an external disk drive interface 78 and input/output (I/O) interfaces 80. These components of the computer are coupled to each other via a system bus 82. The CPU 70 may perform arithmetic, logic and/or control operations by accessing the system memory 72. The CPU 70 may implement the processors of the exemplary devices and/or system described above. The GPU 90 may perform operations for processing graphics. In case the computer 7 is used for implementing the exemplary central processing device 30, the GPU 90 may be the GPU 34 of the exemplary central processing device 30 as described above. The computer 7 does not necessarily include the GPU 90, for example, in case the computer 7 is used for implementing a device other than the central processing device 30. The system memory 72 may store information and/or instructions for use in combination with the CPU 70. The system memory 72 may include volatile and non-volatile memory, such as a random access memory (RAM) 720 and a read only memory (ROM) 722. A basic input/output system (BIOS) containing the basic routines that helps to transfer information between elements within the computer 7, such as during start-up, may be stored in the ROM 722. The system bus 82 may be any of several types of bus structures including a memory bus or memory controller, a peripheral bus, and a local bus using any of a variety of bus architectures.

The computer may include a network interface 74 for communicating with other computers and/or devices via a network.

Further, the computer may include a hard disk drive (HDD) 84 for reading from and writing to a hard disk (not shown), and an external disk drive 86 for reading from or writing to a removable disk (not shown). The removable disk may be a magnetic disk for a magnetic disk drive or an optical disk such as a CD ROM for an optical disk drive. The HDD 84 and the external disk drive 86 are connected to the system bus 82 by a HDD interface 76 and an external disk drive interface 78, respectively. The drives and their associated computer-readable media provide non-volatile storage of computer-readable instructions, data structures, program modules and other data for the general purpose computer. The data structures may include relevant data for the implementation of the method for encrypting and/or decrypting a document, as described herein. The relevant data may be organized in a database, for example a relational or object database.

Although the exemplary environment described herein employs a hard disk (not shown) and an external disk (not shown), it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk, ROM 722 or RAM 720, including an operating system (not shown), one or more application programs 7202, other program modules (not shown), and program data 7204. The application programs may include at least a part of the functionality as described above.

The computer 7 may be connected to a VR system 50, an input device 92 such as mouse and/or keyboard and a display device 94 such as liquid crystal display, via corresponding I/O interfaces 80a to 80c and the system bus 82.

In addition or as an alternative to an implementation using a computer 7 as shown in Fig. 6, a part or all of the functionality of the exemplary embodiments described herein may be implemented as one or more hardware circuits. Examples of such hardware circuits may include but are not limited to: Large Scale Integration (LSI), Reduced Instruction Set Circuits (RISC), Application Specific Integrated Circuit (ASIC) and Field Programmable Gate Array (FPGA).

## Claims

1. A network system comprising a plurality of client devices (10) and at least one central processing device (30), the at least one central processing device (30) comprising:
a central processing unit, CPU (32), configured to receive state data derived from streaming data, the streaming data relating to the plurality of client devices (10) and being generated at the plurality of client devices (10), the state data including information indicating a state of each of the plurality of client devices (10), the state of each client device (10) relating to network traffic to and/or from the client device (10); and
a graphics processing unit, GPU (34), comprising a data store (340) for storing one or more attributes of each client device (10) and for storing a state of each client device (10),
wherein the CPU (32) is further configured to:
forward, to the GPU (34), the received state data as update information relating to said one or more of the plurality of client devices (10); and
wherein the GPU (34) is configured to:
receive the update information from the CPU (32);
update the attributes in the data store using the update information, for each of said one or more of the plurality of client devices (10) to which the update information relates;
perform, for each client device (10), rendering using the one or more attributes of the client device (10) stored in the data store to display, on a display device (52), a plurality of image objects corresponding to the plurality of client devices (10),
wherein the network system further comprises an artificial intelligence, Al, engine (40),
the Al engine (40) comprising a computation unit (42) and an Al database, DB (44),
the computation unit (42) configured to perform computation for the AI in accordance with a machine learning technique to provide a user of the at least one central processing device (30) with information suggesting an action to be taken by the user based on the state data received by the CPU (32),
the suggestion determined by the computation unit (42) being provided to the user by outputting the information representing the suggestion using the display device (52),
wherein the at least one central processing device (30) further comprises an input device configured to receive one or more inputs from the user of the at least one central processing device (30), the one or more inputs being provided in response to the suggestion by the AI engine (40); and
wherein the AI engine (40) is further configured to learn which action to suggest to the user, based on the one or more inputs received from the user,
wherein the Al DB (44) stores a list of possible actions to be taken by the user,
wherein the AI computation unit (42) determines the action to suggest to the user from the list stored in the AI DB (44),
wherein the possible actions include obtaining information of a client device (10) with an error, changing software configuration of a client device 10 with an error, repairing a client device 10 with an error, and/or replacing a client device 10 with an error,
wherein the error is one of no data flow, or a data speed slower than a threshold.

2. The network system according to claim 1, wherein the GPU (34) is configured to perform:
said updating the attributes in the data store in parallel for each of said one or more of the plurality of client devices (10) to which the update information relates; and/or
said rendering in parallel for each client object.

3. The network system according to claim 1 or 2, wherein the state of network traffic to and/or from the client device (10) includes
a speed and/or type of data transmitted from and/or to the client device (10),
information indicating an error state of a non-responding client device (10), and/or
a physical and/or logical location of the client device (10).

4. The network system according to any one of claims 1 to 3, wherein the CPU (32) is further configured to:
perform said forwarding of the received state data as the update information to the GPU (34) in a predetermined time interval; and
include, in the update information to be forwarded to the GPU (34), for each of said one or more of the plurality of client devices (10), the information indicating the state of the client device (10) and having been received latest during the predetermined time interval.

5. The network system according to any one of claims 1 to 4, wherein each of the plurality of image objects to be displayed on the display device comprises a plurality of polygons;
wherein the one or more attributes of each client devices (10) include one or more of the following: position, color, size, distortion, texture; and
wherein the GPU (34) is further configured to, when performing said rendering, determining positions and/or orientations of the plurality of polygons of each of the plurality of image objects.

6. The network system according to any one of claims 1 to 5, further comprising a virtual reality headset, wherein the display device is comprised in the virtual reality headset.

7. A method comprising:
receiving, by a central processing unit, CPU (32), state data derived from streaming data, the streaming data relating to the plurality of client devices (10) and being generated at one or more of a plurality of client devices (10), the state data including information indicating a state of each of the plurality of client devices (10), the state of each client device (10) relating to network traffic to and/or from the client device (10);
forwarding, by the CPU to a graphics processing unit, GPU (34), comprising a data store (340) for storing one or more attributes of each client device (10), the received state data as update information relating to said one or more of the plurality of client devices (10);
receiving, by the GPU (34), the update information from the CPU (32);
updating, by the GPU (34), the attributes in the data store using the update information, for each of said one or more of the plurality of client devices (10) to which the update information relates;
performing, by the GPU (34), for each client device (10), rendering using the one or more attributes of the client device (10) stored in the data store to display, on a display device (52), a plurality of image objects corresponding to the plurality of client devices (10);
providing, by an artificial intelligence, Al, engine (40) comprising a computation unit (42) and an Al database, DB (44), a user with information suggesting an action to be taken by the user based on the state data received by the CPU (32),
wherein the providing comprises the computation unit (42) performing computation for the AI in accordance with a machine learning technique;
wherein the suggestion is provided to the user by outputting the information representing the suggestion using the display device (52),
receiving, by an input device, one or more inputs from the user that are provided in response to the suggestion by the AI engine (40); and
learning, at the Al engine (40), which action to suggest to the user, based on the one or more inputs from the user,
wherein the AI DB (44) stores a list of possible actions to be taken by the user,
wherein the Al computation unit (42) determines the action to suggest to the user from the list stored in the Al DB (44),
wherein the possible actions include obtaining information of a client device (10) with an error, changing software configuration of a client device 10 with an error, repairing a client device 10 with an error, and/or replacing a client device 10 with an error,
wherein the error is one of no data flow, or a data speed slower than a threshold.

8. The method according to claim 7, wherein said updating by the GPU (34) of the attributes in the data store is performed in parallel for each of said one or more of the plurality of client devices (10) to which the update information relates; and/or
wherein said rendering by the GPU (34) is performed in parallel for each client device (10).

9. The method according to claim 7 or 8, wherein the CPU (32) performs said forwarding of the received state data as the update information to the GPU (34) in a predetermined time interval; and
wherein the CPU (32) includes, in the update information to be forwarded to the GPU (34), for each of said one or more of the plurality of client devices (10), the information indicating the state of the client device (10) and having been received latest during the predetermined time interval.

10. The method according to any one of claims 7 to 9, wherein each of the plurality of image objects to be displayed on the display device comprises a plurality of polygons;
wherein the one or more attributes of each client device (10) include one or more of the following: position, color, size, distortion; and
wherein, when performing said rendering, the GPU (34) determines positions and/or orientations of the plurality of polygons of each of the plurality of image objects.

11. A computer program product comprising computer-readable instructions that, when loaded and run on a computer, cause the computer to perform the steps of the method according to any one of claims 7 to 10.

## Patentansprüche

1. Ein Netzwerksystem, das eine Vielzahl von Client-Geräten (10) und mindestens eine zentrale Verarbeitungsvorrichtung (30) umfasst, wobei die mindestens eine zentrale Verarbeitungsvorrichtung (30) Folgendes umfasst:
eine zentrale Verarbeitungseinheit, CPU (32), die so konfiguriert ist, dass sie Statusdaten bzw. Zustandsdaten empfängt, die von Streaming-Daten abgeleitet sind, wobei sich die Streaming-Daten auf die Vielzahl von Client-Geräten (10) beziehen und an der Vielzahl von Client-Geräten (10) erzeugt werden, wobei die Zustandsdaten Informationen beinhalten, die einen Zustand jedes der Vielzahl von Client-Geräten (10) angeben, wobei sich der Zustand jedes Client-Geräts (10) auf den Netzwerkverkehr zu und/oder von dem Client-Gerät (10) bezieht; und
eine Grafikverarbeitungseinheit, GPU (34), die einen Datenspeicher *(data store)* (340) zum Speichern eines oder mehrerer Attribute jedes Client-Geräts (10) und zum Speichern eines Zustands jedes Client-Geräts (10) umfasst,
wobei die CPU (32) ferner dazu konfiguriert ist, um Folgendes zu bewerkstelligen:
Weiterleiten, an die GPU (34), der empfangenen Zustandsdaten als Aktualisierungsinformationen, die sich auf das genannte eine oder die genannten mehreren der Vielzahl von Client-Geräten (10) beziehen; und
wobei die GPU (34) konfiguriert ist, um Folgendes zu bewerkstelligen:
Erhalten der Aktualisierungsinformationen von der CPU (32);
Aktualisieren der Attribute im Datenspeicher unter Verwendung der Aktualisierungsinformationen für jedes des genannten einen oder der genannten mehreren der Vielzahl von Client-Geräten (10), auf die sich die Aktualisierungsinformationen beziehen;
Durchführen, für jedes Client-Gerät (10), eines Renderings, unter Verwendung des einen oder der mehreren Attribute des Client-Geräts (10), die im Datenspeicher gespeichert sind, um auf einer Anzeigevorrichtung (52) eine Vielzahl von Bildobjekten anzuzeigen, die der Vielzahl von Client-Geräten (10) entsprechen,
wobei das Netzwerksystem ferner eine Künstliche Intelligenz-Engine (40), KI-Engine, umfasst,
wobei die Kl-Engine (40) eine Berechnungseinheit (42) und eine Kl-Datenbank, DB (44), umfasst,
wobei die Berechnungseinheit (42) so konfiguriert ist, dass sie gemäß einer Technik des maschinellen Lernens eine Berechnung für die KI durchführt, um einen Benutzer der mindestens einen zentralen Verarbeitungsvorrichtung (30) mit Informationen zu versorgen, die auf der Grundlage der von der CPU (32) erhaltenen Zustandsdaten eine vom Benutzer zu ergreifende Handlung vorschlagen,
wobei der von der Berechnungseinheit (42) bestimmte Vorschlag dem Benutzer durch Ausgeben der den Vorschlag darstellenden Informationen unter Verwendung der Anzeigevorrichtung (52) bereitgestellt wird,
wobei die mindestens eine zentrale Verarbeitungsvorrichtung (30) ferner eine Eingabevorrichtung umfasst, die dazu konfiguriert ist, eine oder mehrere Eingaben vom Benutzer der mindestens einen zentralen Verarbeitungsvorrichtung (30) zu erhalten, wobei die eine oder mehreren Eingaben als Reaktion auf den Vorschlag von der Kl-Engine (40) bereitgestellt werden; und
wobei die Kl-Engine (40) ferner so konfiguriert ist, dass sie auf der Grundlage der einen oder mehreren vom Benutzer empfangenen Eingaben lernt, welche Aktion dem Benutzer vorzuschlagen ist,
wobei die KI-DB (44) eine Liste möglicher Aktionen speichert, die vom Benutzer durchzuführen sind,
wobei die KI-Berechnungseinheit (42) die dem Benutzer vorzuschlagende Aktion aus der in der KI-DB (44) gespeicherten Liste bestimmt,
wobei die möglichen Aktionen Folgendes beinhalten: Erhalten von Informationen über ein Client-Gerät (10) mit einem Fehler, Ändern der Software-Konfiguration eines Client-Geräts 10 mit einem Fehler, Reparieren eines Client-Geräts 10 mit einem Fehler und/oder Ersetzen eines Client-Geräts 10 mit einem Fehler,
wobei der Fehler einer der Folgendes ist: kein Datenfluss oder eine Datengeschwindigkeit, die langsamer ist als ein Schwellenwert.

2. Das Netzwerksystem nach Anspruch 1, wobei die GPU (34) dazu konfiguriert ist, Folgendes durchzuführen:
das genannte Aktualisieren der Attribute im Datenspeicher, parallel für jedes des genannten einen oder der genannten mehreren der Vielzahl von Client-Geräten (10), auf die sich die Aktualisierungsinformationen beziehen; und/oder
das genannte Rendern, parallel für jedes Client-Objekt.

3. Das Netzwerksystem nach Anspruch 1 oder 2, wobei der Zustand des Netzwerkverkehrs zu und/oder von dem Client-Gerät (10) Folgendes beinhaltet:
eine Geschwindigkeit und/oder einen Typ von Daten, die von und/oder zu dem Client-Gerät (10) übertragen werden,
Informationen, die einen Fehlerzustand eines nicht antwortenden Client-Geräts (10) angeben, und/oder
einen physischen und/oder logischen Standort des Client-Geräts (10).

4. Das Netzwerksystem nach irgendeinem der Ansprüche von 1 bis 3, wobei die CPU (32) ferner konfiguriert ist, um Folgendes zu bewerkstelligen:
Durchführen der genannten Weiterleitung der erhaltenen Zustandsdaten als Aktualisierungsinformationen an die GPU (34) in einem vorbestimmten Zeitintervall; und
Inkludieren bzw. Hinzufügen *(include),* zu den an die GPU (34) weiterzuleitenden Aktualisierungsinformationen für jedes des genannten einen oder der genannten mehreren der Vielzahl von Client-Geräten (10), der Informationen, die den Zustand des Client-Geräts (10) angeben und zuletzt während des vorbestimmten Zeitintervalls empfangen wurden.

5. Das Netzwerksystem nach irgendeinem der Ansprüche von 1 bis 4, wobei jedes der Vielzahl von Bildobjekten, die auf der Anzeigevorrichtung angezeigt werden sollen, eine Vielzahl von Polygonen umfasst;
wobei das eine oder die mehreren Attribute jedes Client-Geräts (10) eines oder mehrere der folgenden beinhaltet: Position, Farbe, Größe, Verzerrung, Textur; und
wobei die GPU (34) ferner so konfiguriert ist, dass sie, beim Durchführen des genannten Renderings, Positionen und/oder Ausrichtungen der Vielzahl von Polygonen jedes der Vielzahl von Bildobjekten bestimmt.

6. Das Netzwerksystem nach irgendeinem der Ansprüche von 1 bis 5, das ferner ein Virtual-Reality-Headset umfasst, wobei die Anzeigevorrichtung im Virtual-Reality-Headset enthalten ist.

7. Ein Verfahren, das Folgendes umfasst:
Empfangen, durch eine zentrale Verarbeitungseinheit CPU (32), von Zustandsdaten, die von Streaming-Daten abgeleitet sind, wobei sich die Streaming-Daten auf die Vielzahl von Client-Geräten (10) beziehen und an einem oder mehreren von einer Vielzahl von Client-Geräten (10) erzeugt werden, wobei die Zustandsdaten Informationen beinhalten, die einen Zustand jedes der Vielzahl von Client-Geräten (10) angeben, wobei sich der Zustand jedes Client-Geräts (10) auf den Netzwerkverkehr zu und/oder von dem Client-Gerät (10) bezieht;
Weiterleiten, durch die CPU an eine Grafikverarbeitungseinheit GPU (34), die einen Datenspeicher (340) zum Speichern eines oder mehrerer Attribute jedes Client-Geräts (10) umfasst, der empfangenen Zustandsdaten als Aktualisierungsinformationen, die sich auf das genannte eine oder die genannten mehreren der Vielzahl von Client-Geräten (10) beziehen;
Erhalten, durch die GPU (34), der Aktualisierungsinformationen von der CPU (32);
Aktualisieren, durch die GPU (34), der Attribute im Datenspeicher unter Verwendung der Aktualisierungsinformationen, für jedes des genannten einen oder der genannten mehreren der Vielzahl von Client-Geräten (10), auf die sich die Aktualisierungsinformationen beziehen;
Durchführen, durch die GPU (34), für jede Client-Vorrichtung (10), eines Renderings unter Verwendung des einen oder der mehreren Attribute des Client-Geräts (10), die im Datenspeicher gespeichert sind, um auf einer Anzeigevorrichtung (52) eine Vielzahl von Bildobjekten entsprechend der Vielzahl von Client-Geräten (10) anzuzeigen;
Versorgen, durch eine Künstliche Intelligenz-Engine, KI-Engine, (40), die eine Berechnungseinheit (42) und eine KI-Datenbank, KI-DB, (44) umfasst, eines Benutzers mit Informationen, die eine Aktion vorschlagen, die vom Benutzer auf der Grundlage der von der CPU (32) erhaltenen Zustandsdaten zu ergreifen ist,
wobei das Versorgen umfasst, dass die Berechnungseinheit (42) für die KI eine Berechnung gemäß einer Technik des maschinellen Lernens durchführt;
wobei der Vorschlag für den Benutzer bereitgestellt wird durch Ausgeben der den Vorschlag darstellenden Informationen unter Verwendung der Anzeigevorrichtung (52),
Empfangen, durch eine Eingabevorrichtung, einer oder mehrerer Eingaben vom Benutzer, die als Reaktion auf den Vorschlag der KI-Engine (40) eingegeben bzw. bereitgestellt *(provided)* werden; und
Lernen, bei der Kl-Engine (40), auf der Grundlage der einen oder mehreren Eingaben vom Benutzer, welche Aktion dem Benutzer vorzuschlagen ist,
wobei die KI-DB (44) eine Liste von möglichen Aktionen speichert, die vom Benutzer ergriffen werden können,
wobei die KI-Berechnungseinheit (42) die Aktion, die dem Benutzer vorzuschlagen ist, aus der in der KI-DB (44) gespeicherten Liste bestimmt,
wobei die möglichen Aktionen Folgendes beinhalten: Erhalten von Informationen über ein Client-Gerät (10) mit einem Fehler, Ändern der Software-Konfiguration eines Client-Geräts 10 mit einem Fehler, Reparieren eines Client-Geräts 10 mit einem Fehler und/oder Ersetzen eines Client-Geräts 10 mit einem Fehler,
wobei der Fehler einer der Folgendes ist: kein Datenfluss oder eine Datengeschwindigkeit, die langsamer ist als ein Schwellenwert.

8. Das Verfahren nach Anspruch 7, wobei das genannte Aktualisieren der Attribute im Datenspeicher durch die GPU (34), parallel für jedes des genannten einen oder der genannten mehreren der Vielzahl von Client-Geräten (10), auf die sich die Aktualisierungsinformationen beziehen durchgeführt wird; und/oder
wobei das genannte Rendering durch die GPU (34) parallel für jedes Client-Gerät (10) durchgeführt wird.

9. Das Verfahren nach Anspruch 7 oder 8, wobei die CPU (32) das genannte Weiterleiten der empfangenen Zustandsdaten als Aktualisierungsinformationen an die GPU (34) in einem vorbestimmten Zeitintervall durchführt; und
wobei die CPU (32) in die bzw. zu den an die GPU (34) weiterzuleitenden Aktualisierungsinformationen für jedes des genannten einen oder der genannten mehreren der Vielzahl von Client-Geräten (10) die Informationen inkludiert bzw. hinzufügt *(includes),* die den Zustand des Client-Geräts (10) angeben und zuletzt während des vorbestimmten Zeitintervalls empfangen wurden.

10. Das Verfahren nach irgendeinem der Ansprüche von 7 bis 9, wobei jedes der Vielzahl von Bildobjekten, die auf der Anzeigevorrichtung angezeigt werden sollen, eine Vielzahl von Polygonen umfasst;
wobei das eine oder die mehreren Attribute jedes Client-Geräts (10) eines oder mehrere der folgenden beinhaltet: Position, Farbe, Größe, Verzerrung; und
wobei die GPU (34), bei der Durchführung des genannten Renderings, Positionen und/oder Ausrichtungen der Vielzahl von Polygonen jedes der Vielzahl von Bildobjekten bestimmt.

11. Ein Computerprogrammprodukt, das computerlesbare Anweisungen umfasst, die, wenn sie auf einen Computer geladen und ausgeführt werden, den Computer dazu veranlassen, die Schritte des Verfahrens nach irgendeinem der Ansprüche von 7 bis 10 durchzuführen.

## Revendications

1. Un système de réseau comprenant une pluralité de dispositifs clients (10) et au moins un dispositif central de traitement (30), le au moins un dispositif central de traitement (30) comprenant :
une unité centrale de traitement, CPU (32), configurée pour recevoir des données d'état dérivées de données en continu, les données en continu se rapportant à la pluralité de dispositifs clients (10) et étant générées au niveau de la pluralité de dispositifs clients (10), les données d'état incluant des informations indiquant un état de chacun de la pluralité de dispositifs clients (10), l'état de chaque dispositif client (10) se rapportant au trafic réseau à destination et/ou en provenance du dispositif client (10) ; et
une unité de traitement graphique, GPU (34), comprenant un magasin de données (340) pour stocker un ou plusieurs attributs de chaque dispositif client (10) et pour stocker un état de chaque dispositif client (10),
sachant que la CPU (32) est en outre configurée pour :
acheminer, vers la GPU (34), les données d'état reçues en tant qu'informations de mise à jour relatives audit(s) dispositif(s) client(s) de la pluralité de dispositifs client (10) ; et
sachant que la GPU (34) est configurée pour :
recevoir les informations de mise à jour de la part de la CPU (32) ;
mettre à jour les attributs dans le magasin de données en utilisant les informations de mise à jour, pour chacun dudit un ou desdits plusieurs de la pluralité de dispositifs clients (10) auxquels se rapportent les informations de mise à jour ;
effectuer, pour chaque dispositif client (10), un rendu à l'aide du ou des attributs du dispositif client (10) stockés dans le magasin de données pour afficher, sur un dispositif d'affichage (52), une pluralité d'objets d'images correspondant à la pluralité de dispositifs clients (10),
sachant que le système de réseau comprend en outre un moteur d'intelligence artificielle, IA, (40),
le moteur IA (40) comprenant une unité de calcul (42) et une base de données IA, BD IA (44),
l'unité de calcul (42) étant configurée pour effectuer un calcul pour l'IA conformément à une technique d'apprentissage automatique pour fournir à un utilisateur de l'au moins un dispositif de traitement central (30) des informations suggérant une action à entreprendre par l'utilisateur sur la base des données d'état reçues par la CPU (32),
la suggestion déterminée par l'unité de calcul (42) étant fournie à l'utilisateur par la sortie des informations représentant la suggestion à l'aide du dispositif d'affichage (52),
sachant que l'au moins un dispositif de traitement central (30) comprend en outre un dispositif d'entrée configuré pour recevoir une ou plusieurs entrées de la part de l'utilisateur de l'au moins un dispositif de traitement central (30), l'une ou plusieurs entrées étant fournies en réponse à la suggestion par le moteur IA (40) ; et
sachant que le moteur IA (40) est en outre configuré pour apprendre quelle action suggérer à l'utilisateur, sur la base de la ou des entrées reçues de la part de l'utilisateur,
sachant que la BD IA (44) stocke une liste d'actions possibles à entreprendre par l'utilisateur,
sachant que l'unité de calcul IA (42) détermine l'action à suggérer à l'utilisateur à partir de la liste stockée dans la BD IA (44),
sachant que les actions possibles incluent l'obtention d'informations d'un dispositif client (10) présentant une erreur, la modification de la configuration logicielle d'un dispositif client 10 présentant une erreur, la réparation d'un dispositif client 10 présentant une erreur, et/ou le remplacement d'un dispositif client 10 présentant une erreur,
sachant que l'erreur est l'une parmi l'absence de flux de données ou une vitesse de données inférieure à un seuil.

2. Le système de réseau d'après la revendication 1, sachant que la GPU (34) est configurée pour effectuer :
ladite mise à jour des attributs dans le magasin de données en parallèle pour chacun dudit un ou desdits plusieurs de la pluralité de dispositifs clients (10) auxquels l'information de mise à jour se rapporte ; et/ou
ledit rendu en parallèle pour chaque objet client.

3. Le système de réseau d'après la revendication 1 ou 2, sachant que l'état du trafic réseau vers et/ou depuis le dispositif client (10) inclut
une vitesse et/ou un type de données transmises depuis et/ou vers le dispositif client (10),
des informations indiquant un état d'erreur d'un dispositif client (10) ne répondant pas, et/ou
un emplacement physique et/ou logique du dispositif client (10).

4. Le système de réseau d'après l'une quelconque des revendications de 1 à 3, sachant que la CPU (32) est en outre configurée pour :
effectuer ledit acheminement à la GPU (34) dans un intervalle de temps prédéterminé des données d'état reçues en tant qu'informations de mise à jour; et pour
inclure, dans les informations de mise à jour à acheminer à la GPU (34), pour chacun dudit un ou desdits plusieurs de la pluralité de dispositifs clients (10), les informations indiquant l'état du dispositif client (10) et ayant été reçues en dernier pendant l'intervalle de temps prédéterminé.

5. Le système de réseau d'après l'une quelconque des revendications de 1 à 4, sachant que chacun de la pluralité d'objets d'image à afficher sur le dispositif d'affichage comprend une pluralité de polygones ;
sachant que le ou les attributs de chaque dispositif client (10) incluent un ou plusieurs des éléments suivants : position, couleur, taille, distorsion, texture ; et
sachant que la GPU (34) est en outre configurée pour déterminer, lors de l'exécution dudit rendu, les positions et/ou les orientations de la pluralité de polygones de chacun de la pluralité d'objets d'image.

6. Le système de réseau d'après l'une quelconque des revendications de 1 à 5, comprenant en outre un casque de réalité virtuelle, sachant que le dispositif d'affichage est compris dans le casque de réalité virtuelle.

7. Un procédé, comprenant le fait de :
recevoir, par une unité centrale de traitement, CPU (32), des données d'état dérivées de données en continu, les données en continu se rapportant à la pluralité de dispositifs clients (10) et étant générées au niveau d'un ou de plusieurs dispositifs clients (10), les données d'état incluant des informations indiquant un état de chacun de la pluralité de dispositifs clients (10), l'état de chaque dispositif client (10) se rapportant au trafic réseau à destination et/ou en provenance du dispositif client (10) ;
acheminer, par la CPU vers une unité de traitement graphique, GPU (34), comprenant un magasin de données (340) pour stocker un ou plusieurs attributs de chaque dispositif client (10), les données d'état reçues en tant qu'informations de mise à jour se rapportant audit un ou auxdits plusieurs de la pluralité de dispositifs clients (10) ;
recevoir, par la GPU (34), les informations de mise à jour provenant de la CPU (32) ;
mettre à jour, par la GPU (34), les attributs dans le magasin de données à l'aide des informations de mise à jour, pour chacun dudit ou desdits de la pluralité de dispositifs clients (10) auxquels les informations de mise à jour se rapportent ;
effectuer, par la GPU (34), pour chaque dispositif client (10), un rendu utilisant le ou les attributs du dispositif client (10) stockés dans le magasin de données pour afficher, sur un dispositif d'affichage (52), une pluralité d'objets d'images correspondant à la pluralité de dispositifs clients (10) ;
fournir à un utilisateur, par un moteur d'intelligence artificielle, IA, (40) comprenant une unité de calcul (42) et une base de données IA, BD IA (44), des informations suggérant une action à entreprendre par l'utilisateur sur la base des données d'état reçues par la CPU (32),
sachant que la fourniture comprend l'exécution par l'unité de calcul (42) d'un calcul pour l'IA conformément à une technique d'apprentissage automatique ;
sachant que la suggestion est fournie à l'utilisateur en émettant les informations représentant la suggestion à l'aide du dispositif d'affichage (52),
recevoir, de la part de l'utilisateur et par un dispositif d'entrée, une ou plusieurs entrées qui sont fournies en réponse à la suggestion par le moteur IA (40) ; et de
apprendre, au niveau du moteur IA (40), quelle action suggérer à l'utilisateur, en fonction de la ou des entrées de l'utilisateur,
sachant que la BD IA (44) stocke une liste d'actions possibles à effectuer par l'utilisateur,
sachant que l'unité de calcul IA (42) détermine l'action à suggérer à l'utilisateur à partir de la liste stockée dans la BD IA (44),
sachant que les actions possibles incluent l'obtention d'informations d'un dispositif client (10) présentant une erreur, la modification de la configuration logicielle d'un dispositif client 10 présentant une erreur, la réparation d'un dispositif client 10 présentant une erreur, et/ou le remplacement d'un dispositif client 10 présentant une erreur,
sachant que l'erreur est l'une parmi l'absence de flux de données ou une vitesse de données inférieure à un seuil.

8. Le procédé d'après la revendication 7, sachant que ladite mise à jour par la GPU (34) des attributs dans le magasin de données est effectuée en parallèle pour chacun dudit un ou desdits plusieurs de la pluralité de dispositifs clients (10) auxquels l'information de mise à jour se rapporte ; et/ou
sachant que ledit rendu effectué par la GPU (34) est effectué en parallèle pour chaque dispositif client (10).

9. Le procédé d'après la revendication 7 ou 8, sachant que la CPU (32) effectue ledit acheminement à la GPU (34) des données d'état reçues en tant qu'informations de mise à jour dans un intervalle de temps prédéterminé ; et
sachant que la CPU (32) inclut, dans les informations de mise à jour à acheminer à la GPU (34), pour chacun dudit un ou desdits plusieurs de la pluralité de dispositifs clients (10), les informations indiquant l'état du dispositif client (10) et ayant été reçues au plus tard pendant l'intervalle de temps prédéterminé.

10. Le procédé d'après l'une quelconque des revendications de 7 à 9, sachant que chacun de la pluralité d'objets d'images à afficher sur le dispositif d'affichage comprend une pluralité de polygones ;
sachant que le ou les attributs de chaque dispositif client (10) incluent un ou plusieurs des éléments suivants : position, couleur, taille, distorsion ; et
sachant que, lors de l'exécution dudit rendu, la GPU (34) détermine les positions et/ou les orientations de la pluralité de polygones de chacun de la pluralité d'objets d'image.

11. Un produit programme d'ordinateur comprenant des instructions lisibles par ordinateur qui, lorsqu'elles sont chargées et exécutées sur un ordinateur, amènent l'ordinateur à exécuter les étapes du procédé d'après l'une quelconque des revendications de 7 à 10.
